Europäisches Patentamt

European Patent Office

Office européen des brevets

(19)

(11) Publication number: 0 379 232

A1

# EUROPEAN PATENT APPLICATION

(12)

(21) Application number: 90200012.4

(22) Date of filing: 03.01.90

(51) Int. Cl.5: **C08B 30/04, C08B 30/10, A23L 1/10**

(30) Priority: **17.01.89 NL 8900098**

(43) Date of publication of application:
**25.07.90 Bulletin 90/30**

(84) Designated Contracting States:
**AT BE DE DK ES FR GB GR IT NL**

(71) Applicant: **DORR-OLIVER INCORPORATED**
**612 Wheeler's Farm Road**
**Milford Connecticut 06460-8719(US)**

(72) Inventor: **Caransa, Abraham**
**Langs de Baan 56**
**NL-1422 KZ Uithoorn(NL)**
Inventor: **van den Dorpel, Jan**
**Regentesselaan 10**
**NL-1405 EL Bussum(NL)**
Inventor: **Racz, Imre Gyula**
**Mozartlaan 184**
**NL-7522 HS Enschede(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) A corn steeping process as well as a process and apparatus for processing corn.

(57) A corn steeping process comprising contacting corn grains with sulphur dioxide containing steeping liquid at a temperature of from 40° to 55°C in a fluidized bed formed from the corn grains and steeping liquid. The steeping may be performed in one or more vessels. The fluidization velocity is preferably from $20.10^{-3}$ to $100.10^{-3}$ m.s.$^{-1}$. Further, a process for processing corn comprising the above steeping step, and an apparatus for processing corn comprising a fluidized bed reactor as a steeping device are disclosed.

EP 0 379 232 A1

## A corn steeping process as well as a process and apparatus for processing corn.

This invention relates to a corn steeping process wherein corn grains in one or more vessels are contacted with sulphur dioxide containing steeping liquid at a temperature of from 40° to 55°C. In the manufacture of corn starch, it is customary to subject full, cleaned corn grains first to a prolonged steeping treatment in an aqueous solution of sulphur dioxide and/or lactic acid in order to prepare these grains for subsequent milling and starch separating operations. During this steeping treatment, the aqueous solution extracts soluble substances from the corn kernels. The resulting steep liquor may be used as a nutrient medium for microbiological fermentations or in concentrated form as a component of cattle feed.

The steeping treatment is usually effected in vertical reaction vessels by filling these vessels with a batch of corn, adding an amount of steeping liquor and applying steam so as to maintain the temperature at about 50°C. After completion of the treatment the liquor is drained off and the corn is removed from the vessel and fed to a milling station.

In practice, a number of reaction vessels, e.g. six to ten or more are positioned next to one other and are filled one after the other with a batch of corn. In this way, the corn in the first filled vessel has already undergone a relatively long steeping treatment by the time the last vessel is filled.

The steeping liquor is passed then through all these vessels in series, first entering the vessel in which the corn has already undergone a long steeping treatment, then passing to a vessel in which the corn has undergone a shorter steeping treatment etc., and finally entering the vessel filled with fresh corn.

In each of these vessels, the steeping liquor will extract soluble substances from the corn so that it will grow gradually more concentrated in soluble components.

Thus, whereas the corn wet milling process following the steeping process is a continuous process, the steeping is static, semi-continuous and therefore time-consuming and inefficient. The steeping time varies from 32 to 60 hours depending upon the corn quality.

In the current conventional steeping-system the liquid flows from top to bottom. The corn sits in the vessels and each kernel is for more than 65% covered by other corn kernels. All corn grains remain stationary during the whole steeping treatment, which will increase the irregularity of the liquor flow around the corn kernels. During the steeping treatment the kernels swell by absorption of water. However, in a large steeping vessel corn does not appear to increase in volume because the weight of grain forces the swelling kernels to reorient to fill the irregular voids between the kernels. When said voids become smaller, the velocity of the liquid around the kernels decreases even more and so does the mass transfer. Therefore, the efficiency of steeping treatment decreases in time.

Many efforts have been carried out to reduce the steeping time. Kempf, Die Stärke, 23 (1971) Nr. 3, pages 89-95, mentions that in laboratory tests it has been found that using a mechanical movement of corn in comparison with the conventional corn steeping process equal starch yields may be obtained at a shortened steeping time of about 30 hours while maintaining equal quality properties of the obtained starch. However, the quantitative and qualitative results are only comparable with those obtained after conventional steeping at marginally reduced steeping times.

Hassanean, Die Stärke, 38 (1968) Nr. 12, pages 417-419, steeped corn grains by using two methods in laboratory. The first method was the usual counter-current system for 50 hours as a check. The second method was the counter-current system with agitation at low speed (150 r.p.m.) for 10 hours. The steeping agent in the first 5 hours was a used sulphurous acid solution and in the second 5 hours a fresh $SO_2$ solution.

The results show that the moisture and protein contents of intact grains after the two steeping treatments are equal and that also the starch yields are quite similar. However, changing the steeping liquor will cause problems when applied on industrial scale. Further, in this article it is reported that in a plant the steeping time could be reduced to 25 hours by using the counter-current system with circulation of corn grains and corn steep water.

The agitation and mechanical movement proposed in the above prior art are highly energy-intensive and difficult to carry out full scale industrial applications. The object of this invention is to provide a corn steeping process which can be carried out in a short period without technical difficulties.

The invention provides for a corn steeping process as defined in the preamble, characterized in that the steeping is carried out in a fluidized bed formed from corn grains and steeping liquid. The fluidization is found to offer an improvement in mass transfer, resulting in a steeping time reduced to only 12 hours. As in the prior art, the process according to the invention can be carried out in one vessel, wherein the steeping liquid is recycled through the vessel by continuously discharging said liquid at the top of the vessel and feeding the liquid at the bottom of the vessel.

Alternatively, the process according to the invention can be carried out in a number of reaction vessels in series, wherein the steeping liquid is passed through the vessels in counter-current by continuously discharging said liquid at the top of a vessel and feeding the liquid at the bottom of a subsequent vessel.

In order to obtain a good fluidization a minimum fluidization velocity of $20.10^{-3}$ m.s.$^{-1}$ is necessary. Preferably the fluidization velocity is from $20.10^{-3}$ to $100.10^{-3}$ m.s.$^{-1}$ , especially $60.10^{-3}$ m.s.$^{-1}$. Alternatively, the fluidization conditions may be expressed as the flow percentage per time unit of the available steeping liquid.

This flow percentage may vary from 10 to 100% per hour. Optimal results in the lab have been obtained using a flow of 12% per hour, the other variables of the steeping process being those of the prior art, i.e. a temperature of $50^{\circ}$ C and a $SO_2$ content of 0.2%. Using the above conditions the steeping time could be reduced to 12 hours, i.e. 25% of the steeping time under conventional conditions, while maintaining:

- moisture absorption of the corn,
- separability in various components (fibers, germs, gluten and starch) according to the known Pelshenke and Lindemann method,
- quality of the various products.

Exerting pressure appeared to have no effect on the process of the invention. Therefore, the process is preferably carried out under atmospheric pressure.

Adding corn components degrading enzymes to the steeping liquid indeed appeared to have a favourable effect. The above-mentioned enzymes are in particular phytin - degrading enzymes and cellulases.

Based on lab experiments it is expected that when treating U.S. Yellow Nr. 2 corn or similar, less than one year old and/or when adding phytin-degrading or other enzymes to the steeping liquid a steeping time of 8 to 10 hours or less will be adequate.

The invention further provides a process for processing corn comprising the consecutive steps of

a) steeping corn grains in warm water containing sulphur dioxide in a fluidized bed formed by corn grains and steeping liquid,

b) separating the steep water from the grains and concentrating it,

c) milling the grains coarsely and separating and dewatering germs,

d) fine-milling the grains, separating fibers from starch and protein, and dewatering the fiber fractions, and

e) separating starch and protein from each other, concentrating the protein fraction and drying and/or converting the starch fraction.

Further, the invention provides for an apparatus for processing corn essentially comprising a steeping device comprising a reaction vessel or a number of reaction vessels connected in series, said steeping device being connected to separators for the various corn fractions such as fibers, starch and protein, characterized in that the vessel(s) is (are) fluidized bed reactors.

The preferred embodiment for performing Fluidized Bed Steeping (F.B.S.) is a cylindrical vessel comprising three sections, being:

- the lower section having a conical shape and equipped with provisions for distributing the liquid flow evenly over the cross-sectional area
- the middle section which holds the fluidized bed of corn kernels and which is equipped with provisions to prevent the corn kernels from entering the upper section
- the upper section for discharging the steeping liquid.

The unsteeped corn will be fed to the middle section, and the steeped corn will be discharged from this section or from the lower section.

Example

In this example French South-West corn was used having a bulk weight of 763 g.l.$^{-1}$, and a moisture content of 12.95%. The analytical composition in percentage dry substance is: starch 71.13%, protein 9.67%, fat 4.82%, mineral ash 1.27% and solubles 4.23%.

On a laboratory scale 2 tests were carried out:

A. 48 hours of conventional steeping

B. 12 hours of steeping in a fluidized bed having flow of 12% per hour.

After steeping the corn grains were further analyzed according to the standard Pelshenke and Lindemann method.

**EP 0 379 232 A1**

The SO$_2$ content in both tests was 0.2%.
The temperature in test A was 50°C and in test B 47° to 49°C.
The results are shown in the following Table.

TABLE

| Yield in % of dry weight | | |
|---|---|---|
| Test | A | B |
| Steepwater dry substance | 4.47 | 4.94 |
| Germs (fat content) | 7.79 (43.96) | 7.90 (44.27) |
| Fibers (bound starch content) | 10.42 (16.36) | 10.12 (15.14) |
| Starch (protein content) | 66.88 (0.83) | 66.08 (1.10) |
| Gluten (protein content) | 7.10 (51.49) | 8.95 (49.13) |
| Supernatant dry substance | 2.78 | 1.78 |
| Total dry substance | 99.45 | 99.77 |
| Starch recovery | 94.0 | 92.9 |
| Moisture content after steeping | 43.26 | 40.78 |

As appears from the Table the values obtained by using the conventional process and by using the process of the invention, are very close to one another.

**Claims**

1. A corn steeping process wherein corn grains in one or more vessels are contacted with sulphur dioxide containing steeping liquid at a temperature of from 40° to 55°C, **characterized in that** the steeping is performed in a fluidized bed formed from corn grains and the steeping liquid.

2. A corn steeping process according to claim 1, **characterized in that** the corn is steeped in one vessel wherein said steeping liquid is recycled through the vessel by continuously discharging said liquid at the top of the vessel and feeding the liquid at the bottom of the vessel.

3. A corn steeping process according to claim 1, **characterized in that** the corn is steeped in a number of vessels in series wherein the steeping liquid is passed through the vessels in counter-current by continuously discharging said liquid at the top of a vessel and feeding the liquid at the bottom of a subsequent vessel.

4. A corn steeping process according to one of the preceding claims, **characterized in that** the fluidization velocity is from $20.10^{-3}$ to $100.10^{-3}$ m.s.$^{-1}$ .

5. A corn steeping process according to one of the preceding claims, **characterized in that** said steeping liquid moreover contains one or more corn components degrading enzymes.

6. A corn steeping process according to claim 5, **characterized in that** the steeping liquid contains one or more phytin degrading enzymes and/or cellulases.

7. A corn steeping process according to one of the preceding claims, **characterized in that** the steeping is performed under atmospheric pressure.

8. A corn steeping process according to one of the preceding claims, **characterized in that** the steeping is performed during 8 to 20 hours.

9. A process for processing corn comprising the consecutive steps of

a) steeping corn grains in warm water containing sulphur dioxide,

b) separating the steep water from the grains and concentrating it,

c) milling the grains coarsely and separating and dewatering germs,

d) fine-milling the grains, separating fibers from starch and protein, and dewatering the fiber fraction, and

e) separating starch and protein from each other, concentrating the protein fraction and drying and/or converting the starch fraction, characterized in that the steeping step a) is performed according to one of the preceding claims.

10. An apparatus for processing corn essentially comprising a steeping device comprising one reaction vessel or a number of reaction vessels connected in series, said device being coupled to devices in which

4

the fiber, starch and protein fractions are separated from each other, **characterized in that** the vessel or the vessels is/are fluidized bed reactor(s).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 270 755 (WESTFALIA SEPARATOR) <br> * Drawing * <br> --- | 1-10 | C 08 B 30/04 <br> C 08 B 30/10 <br> A 23 L 1/10 |
| Y | US-A-4 106 487 (RANDALL et al.) <br> * Drawing and claims * <br> --- | 1-10 | |
| A | PATENT ABSTRACTS OF JAPAN, vol. 3, no. 157 (C-68), 22nd December 1979, page 166 C 68; & JP-A-54 135 670 (SUMITOMO KAGAKU KOGYO) <br> ----- | 10 | |

TECHNICAL FIELDS SEARCHED (Int. Cl.5)

C 08 B

The present search report has been drawn up for all claims

| Place of search | Date of completion of the search | Examiner |
|---|---|---|
| THE HAGUE | 12-04-1990 | LENSEN H.W.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)